# EUROPEAN PATENT APPLICATION

(11) **EP 4 040 822 A1**
(43) Date of publication of application: **10.08.2022**
(21) Application number: 19947725.8
(22) Date of filing: 30.09.2019
(51) Int. Cl.: H04W 8/22, H04W 72/04, H04W 4/00

(54) **TERMINAL AND COMMUNICATION METHOD**

(71) Applicant: NTT DOCOMO, INC., Chiyoda-Ku Tokyo 100-6150 (JP)
(72) Inventor: TAKAHASHI, Hideaki, Tokyo 100-6150 (JP); UMEDA, Hiromasa, Tokyo 100-6150 (JP); OGUMA, Yuta, Tokyo 100-6150 (JP)
(74) Representative: Hoffmann Eitle
(86) International application number: PCT/JP2019/038654
(87) International publication number: WO 2021/064841

(57) **Abstract**

A terminal is provided. The terminal includes a reception unit configured to receive band information of a first radio access technology (RAT) and a second RAT band from a base station apparatus; a control unit configured to determine a first parameter indicating a supported bandwidth combination set for a first RAT component of a band combination of a dual connectivity of the first RAT and the second RAT (EN-DC), a second parameter indicating a supported bandwidth combination set for a second RAT component of the EN-DC band combination, and a third parameter indicating a supported bandwidth combination set for an intra-band component of the first RAT and the second RAT, of the EN-DC band combination; and a transmission unit configured to transmit terminal capability information including the determined first, second, and third parameters to the base station apparatus.

## Description

### [FIELD OF THE INVENTION]

The present invention relates to a terminal (user apparatus) and a communication method in a wireless communication system.

### [BACKGROUND OF THE INVENTION]

Currently, in 3GPP (Third Generation Partnership Project), specifications have been developed for a new wireless communication system that is called "NR (New Radio Access Technology) system" as a successor of "LTE (Long Term Evolution) system" and "LTE-Advanced system" (e.g., non-patent document 1).

In the NR system, introduction of a technology called "LTE-NR Dual Connectivity" or "Multi-RAT (Multi Radio Access Technology) Dual Connectivity" (hereinafter, referred to as "MR-DC") has been discussed, in which, similar to the Dual Connectivity in the LTE system, data sets are divided between a base station of an LTE system (eNB) and a base station of an NR system (gNB) and the divided data sets are transmitted to or received by the base stations at the same time (e.g., non-patent document 2). Multi RAT is an abbreviation for Multi Radio Access Technology.

### [Citation List]

### [Non-Patent Document]

[Non-Patent Document 1] 3GPP TS 38.300 V15.3.0 (2018-09)
[Non-Patent Document 2] 3GPP TS 37.340 V15.3.0 (2018-09)
[Non-Patent Document 3] 3GPP TS 36.101 V15.3.0 (2018-06)
[Non-Patent Document 4] 3GPP TS 38.101-1 V15.3.0 (2018-09)
[Non-Patent Document 5] 3GPP TS 38.101-2 V15.3.0 (2018-09)
[Non-Patent Document 6] 3GPP TS 38.101-3 V15.3.0 (2018-09)

### SUMMARY OF THE INVENTION

### [TECHNICAL PROBLEM]

In MR-DC, a list, which includes bands specified in E-UTRA (Evolved Universal Terrestrial Radio Access) and bands specified in NR, is transmitted to a user apparatus. The user apparatus determines band combinations supported by the user apparatus from the list. Here, considered as band combinations for a bandwidth combination set supported by the user apparatus are: band combinations of inter-band multi-RAT dual connectivity between E-UTRA and NR (inter-band EN-DC); and band combinations of intra-band multi-RAT dual connectivity (intra-band EN-DC).

The method of indicating the bandwidth combination set (BWCS) from the user apparatus to the base station apparatus for the band combinations of the inter-band EN-DC and the intra-band EN-DC is not specified.

The present invention has been made in view of the foregoing, and it is an object to provide a technique of indicating, from a user apparatus to a base station apparatus, a bandwidth combination set for the inter-band EN-DC and the intra-band EN-DC, in a wireless communication system using a plurality of RATs (E-UTRA and NR).

### [SOLUTION TO PROBLEM]

According to an embodiment of the present invention, A terminal is provided. The terminal includes a reception unit configured to receive band information of a first radio access technology (RAT) and a second RAT band from a base station apparatus; a control unit configured to determine a first parameter indicating a supported bandwidth combination set for a first RAT component of a band combination of a dual connectivity of the first RAT and the second RAT (EN-DC), a second parameter indicating a supported bandwidth combination set for a second RAT component of the EN-DC band combination, and a third parameter indicating a supported bandwidth combination set for an intra-band component of the first RAT and the second RAT, of the EN-DC band combination; and a transmission unit configured to transmit terminal capability information including the determined first, second, and third parameters to the base station apparatus.

### [ADVANTAGEOUS EFFECTS OF INVENTION]

According to an embodiment of the present invention, it is possible for a terminal (user apparatus) to indicate, to a base station apparatus, information related to a band combination for dual connectivity, in a wireless communication system using a plurality of RATs.

### BRIEF DESCRIPTION OF THE DRAWINGS

Fig. 1 is a configuration example of a wireless communication system according to an embodiment of the present invention.
Fig. 2 is a sequence diagram in which a user apparatus 20 according to an embodiment of the present invention transmits capability information to a base station apparatus 10.
Fig. 3A is an example of an indication (No. 1) of bandwidth combinations for band combinations of inter-band EN-DC and intra-band EN-DC.
Fig. 3B is an example of an indication (No. 1) of bandwidth combinations for band combinations of inter-band EN-DC and intra-band EN-DC.
Fig. 3C is an example of an indication (No. 1) of bandwidth combinations for band combinations of inter-band EN-DC and intra-band EN-DC.
Fig. 3D is an example of an indication (No. 1) of bandwidth combinations for band combinations of inter-band EN-DC and intra-band EN-DC.
Fig. 4A is an example of an indication (No. 2) of bandwidth combinations for band combinations of inter-band EN-DC and intra-band EN-DC.
Fig. 4B is an example of an indication (No. 2) of bandwidth combinations for band combinations of inter-band EN-DC and intra-band EN-DC.
Fig. 4C is an example of an indication (No. 2) of bandwidth combinations for band combinations of inter-band EN-DC and intra-band EN-DC.
Fig. 4D is an example of an indication (No. 2) of bandwidth combinations for band combinations of inter-band EN-DC and intra-band EN-DC.
Fig. 4E is an example of an indication (No. 2) of bandwidth combinations for band combinations of inter-band EN-DC and intra-band EN-DC.
Fig. 5A is an example of an indication (No. 3) of bandwidth combinations for band combinations of inter-band EN-DC and intra-band EN-DC.
Fig. 5B is an example of an indication (No. 3) of bandwidth combinations for band combinations of inter-band EN-DC and intra-band EN-DC.
Fig. 5C is an example of an indication (No. 3) of bandwidth combinations for band combinations of inter-band EN-DC and intra-band EN-DC.
Fig. 5D is an example of an indication (No. 3) of bandwidth combinations for band combinations of inter-band EN-DC and intra-band EN-DC.
Fig. 5E is an example of an indication (No. 3) of bandwidth combinations for band combinations of inter-band EN-DC and intra-band EN-DC.
Fig. 5F is an example of an indication (No. 3) of bandwidth combinations for band combinations of inter-band EN-DC and intra-band EN-DC.
Fig. 5G is an example of an indication (No. 3) of bandwidth combinations for band combinations of inter-band EN-DC and intra-band EN-DC.
Fig. 6 is drawing illustrating an example of a functional structure of a base station apparatus 10 according to an embodiment of the present invention.
Fig. 7 is drawing illustrating an example of a functional structure of a user apparatus 20 according to an embodiment of the present invention.
Fig. 8 is a drawing illustrating an example of hardware structures of the base station apparatus 10 and the user apparatus 20 according to an of the present invention embodiment the present invention.

### DETAILED DESCRIPTION OF THE PREFERRED EMBODIMENTS

In the following, referring to the drawings, one or more embodiments of the present invention will be described.

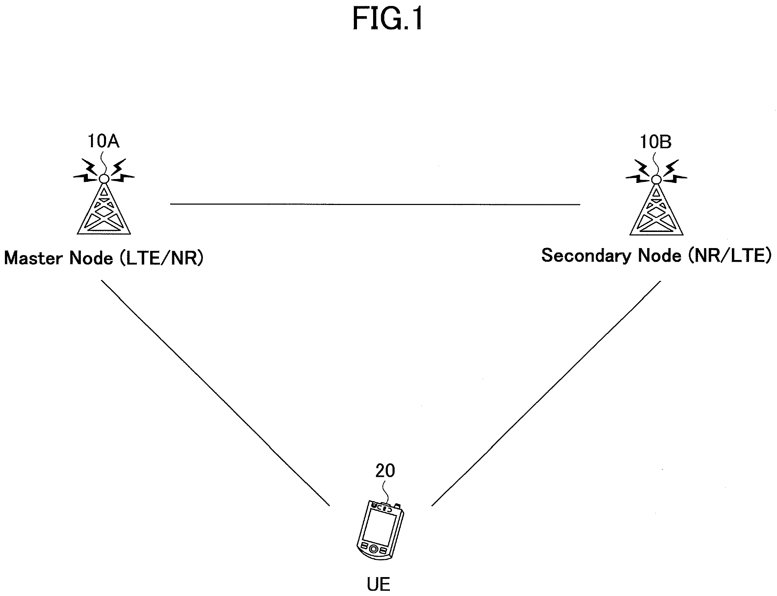

Fig. 1 is a configuration example of a wireless communication system according to an embodiment of the present invention.

As illustrated in Fig. 1, a user apparatus 20 communicates with (is connected to) a base station apparatus 10A and a base station apparatus 10B provided by the LTE system and the NR system, respectively (hereinafter, referred to as "base station apparatus 10" in the case of not distinguishing between the base station apparatus 10A and the base station apparatus 10B), and supports LTE-NR dual connectivity in which the base station apparatus 10A is a master base station and the base station apparatus 10B is a secondary base station. In other words, it is possible for the user apparatus 20 to perform simultaneous transmission to or simultaneous reception from the master base station apparatus 10A and the secondary base station apparatus 10B by simultaneously using a plurality of component carriers provided by the master base station apparatus 10A and the secondary base station apparatus 10B. It should be noted that, although a single base station is included in each of the LTE system and the NR system in an embodiment illustrated in the figure, in general, many base stations are arranged in order to cover service areas of the LTE system and the NR system.

It should be noted that, although the LTE-NR dual connectivity (EN-DC) will be described in the following embodiments, it should be easily understood by a person skilled in the art that a user apparatus according to an embodiment of the present invention is not limited to be adapted to the LTE-NR dual connectivity, and may be also applied to NR-LTE dual connectivity in which a base station apparatus 10A of NR system is a master base station, and a base station apparatus 10B of LTE system is a secondary base station (also referred to as NE-DC), and may be applied to dual connectivity between a plurality of wireless communication systems using different RATs, that is, MR-DC.

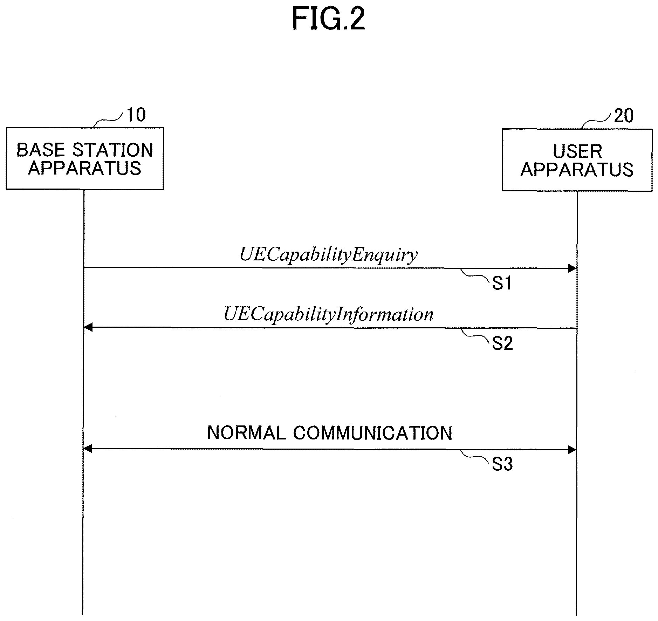

Fig. 2 is a sequence diagram in which a user apparatus 20 according to an embodiment of the present invention transmits terminal capability information to a base station apparatus 10. In Fig. 2, the base station apparatus 10 transmits a terminal capability transmission request to the user apparatus 20, and the user apparatus 20 transmits terminal capability information to the base station apparatus 10 in response to the terminal capability transmission request.

In step S1, the base station apparatus 10 transmits, as a terminal capability transmission request, an RRC (Radio Resource Control) message "UECapabilityEnquiry" to the user apparatus 20. "UECapabilityEnquiry" is used by a network in order to obtain information related to radio access capability of the user apparatus 20. It is possible for the base station apparatus 10 to specify a type of radio access capability included in the information transmitted by the user apparatus 20 by using "UECapabilityEnquiry". For example, the base station apparatus 10 may request for transmission of radio access capability related to bandwidth combinations supported by the user apparatus 20. Further, the base station apparatus 10 may request for transmission of bandwidth combinations, supported by the user apparatus 20, for band combinations including bands included in a list of "requestedFreqBandList" that is transmitted to the user apparatus 20.

Next, in step S2, the user apparatus 20 transmits, as the terminal capability information, an RRC message, "UECapabilityInformation", to the base station apparatus 10. "UECapabilityInformation" is used for transmitting information related to radio access capability of the user apparatus 20 to the network. The user apparatus 20 transmits the information related to radio access capability supported by the user apparatus 20 to the base station apparatus 10 based on the "UECapabilityEnquiry" received from the base station apparatus 10 in step S1.

In step S3, the base station apparatus 10 performs normal communications adapted to the terminal capability according to the "UECapabilityInformation" received from the user apparatus 20 in step S2. For example, in the case where information indicating the supported bandwidth combinations are included in the "UECapabilityInformation" received from the user apparatus 20 in step S2, the base station apparatus 10 performs the scheduling within a range of the supported bandwidth combinations.

### (Embodiment 1)

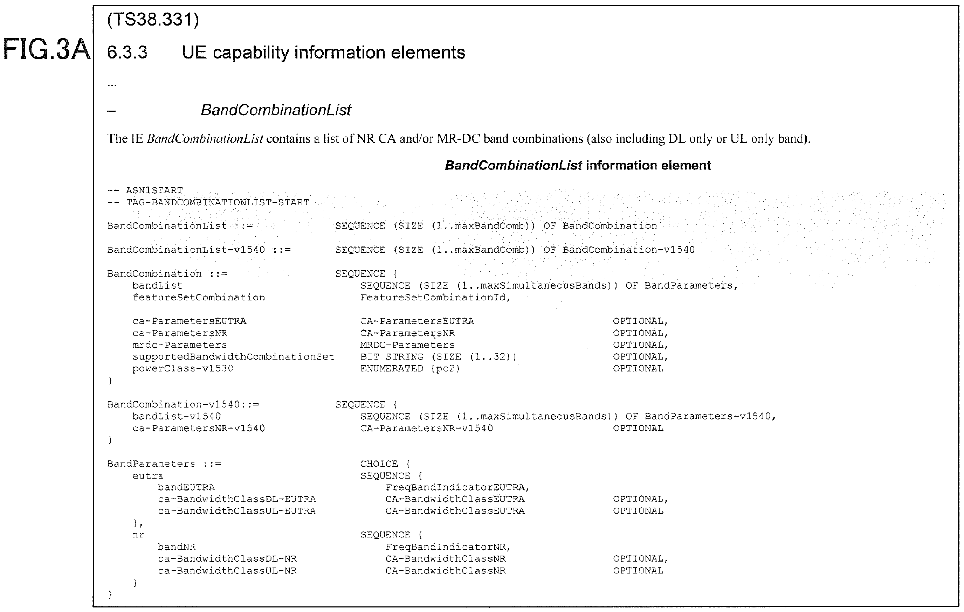

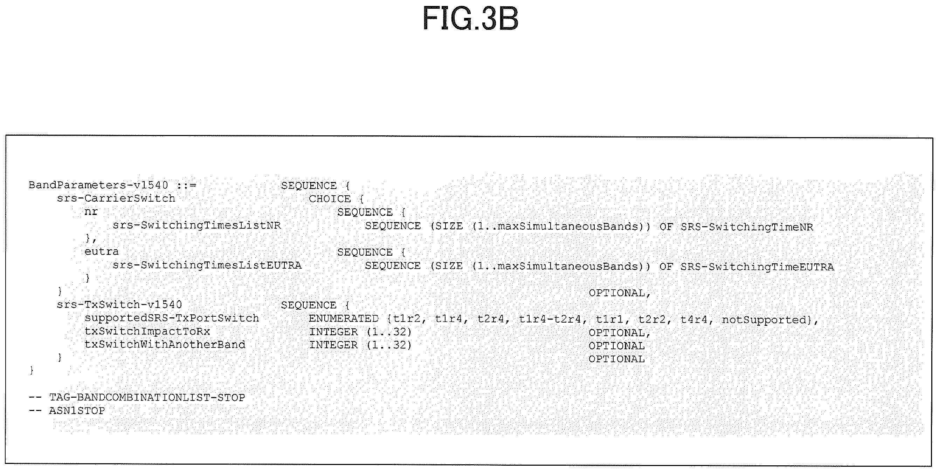

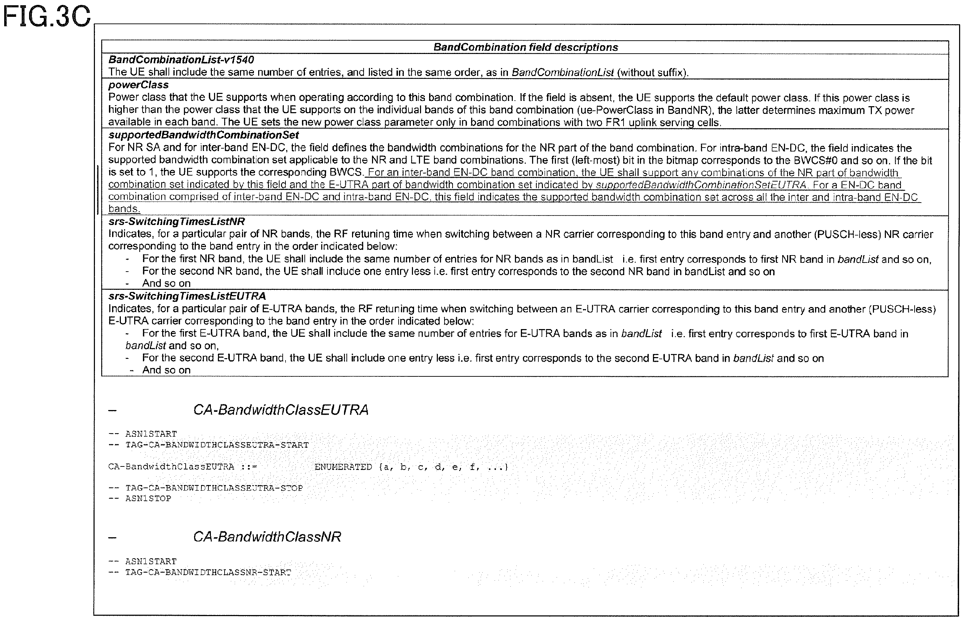

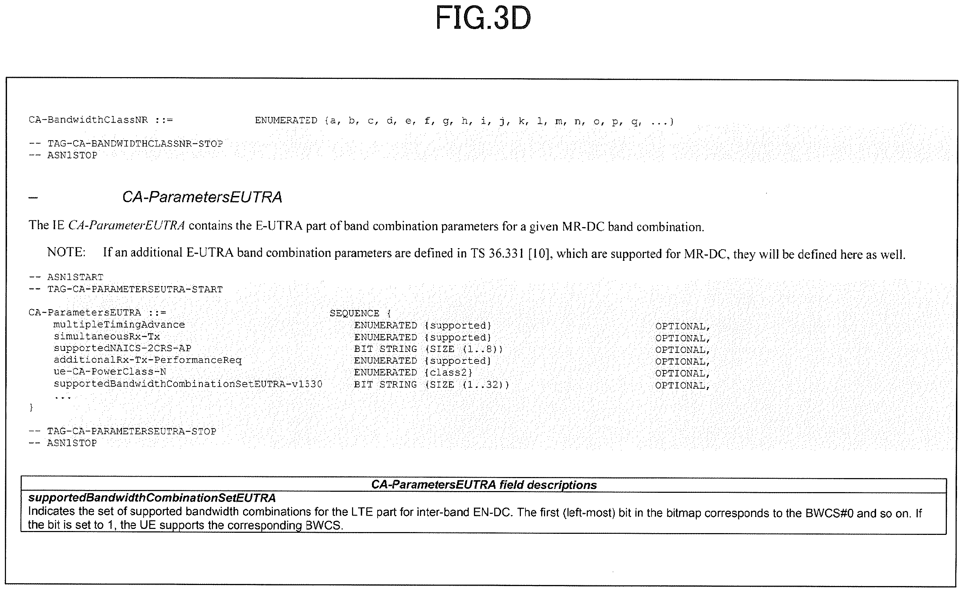

Fig. 3A, Fig. 3B, Fig. 3C, and Fig. 3D are examples of an indication (No. 1) of bandwidth combinations for band combinations of inter-band EN-DC and intra-band EN-DC.

As shown in Figs. 3A, 3B, 3C, and 3D, one of the information elements of the terminal capability transmitted from the user apparatus 20 to the base station apparatus 10 includes a BandCombinationList that is a parameter for indicating bandwidth combinations supported by the user apparatus 20. The BandCombinationList includes supportedBandwidthCombinationSet that is a field for indicating bandwidth combinations supported by the user apparatus 20. The supportedBandwidthCombinationSet is a bit map of up to 32 bits, and the user apparatus 20 can indicate up to 32 bandwidth combinations supported by the user apparatus 20.

For NR SA (standalone) and for inter-band EN-DC, bandwidth combinations for the NR part of the band combinations are configured to this field "supportedBandwidthCombinationSet".

Further, for intra-band EN-DC, the supported bandwidth combination set (supported BWCS), which is supported by the user apparatus 20, applicable to the NR and LTE band combinations, is configured to this field "supportedBandwidthCombinationSet". For example, the first bit (leftmost bit) of the supportedBandwidthCombinationSet bitmap corresponds to a bandwidth combination #0 (BWCS#0) and the second bit corresponds to a bandwidth combination #1 (BWCS#1). In a case where the bit is set to 1, the user apparatus 20 supports the corresponding bandwidth combination.

For an inter-band EN-DC band combination, the user apparatus 20 may support any combination of the NR part of the bandwidth combination set indicated by this field and the E-UTRA part of the bandwidth combination set indicated by the parameter supportedBandwidthCombinationSetEUTRA.

The parameter supportedBandwidthCombinationSetEUTRA is a field included in the CA-ParametersEUTRA, which is one of the information elements of the terminal capability transmitted from the user apparatus 20 to the base station apparatus 10.

For an EN-DC band combination comprised of inter-band EN-DC and intra-band EN-DC, this field indicates the supported bandwidth combination set across all the inter and intra-band EN-DC bands (all bands are taken into account), supported by the user apparatus 20.

### (Embodiment 2)

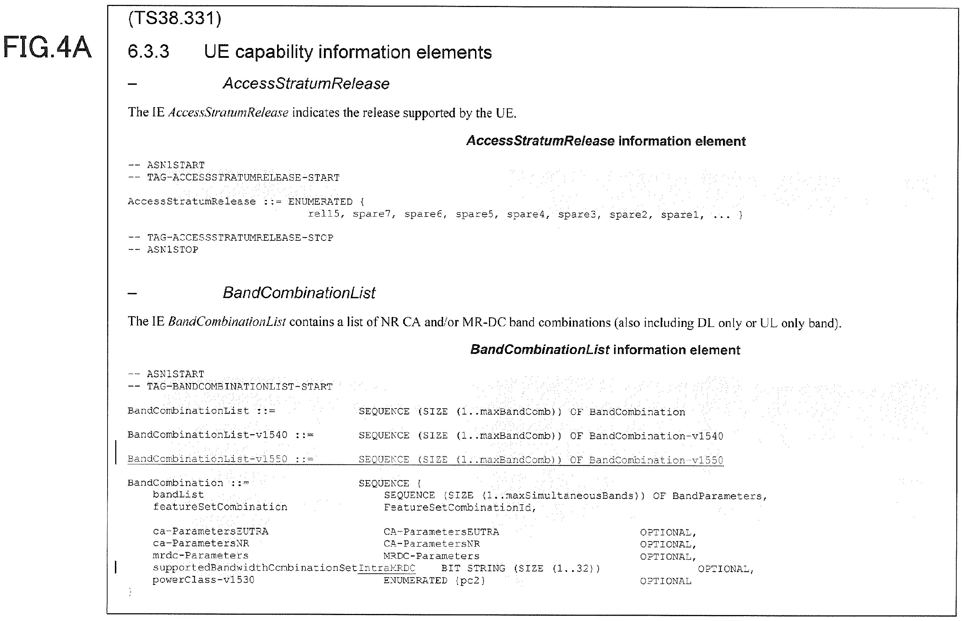

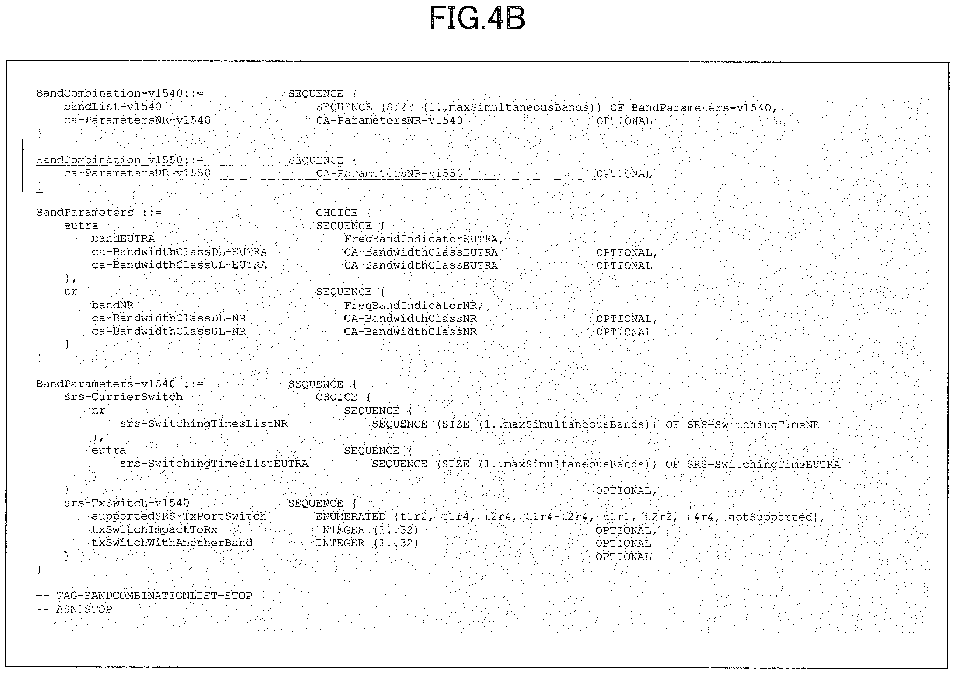

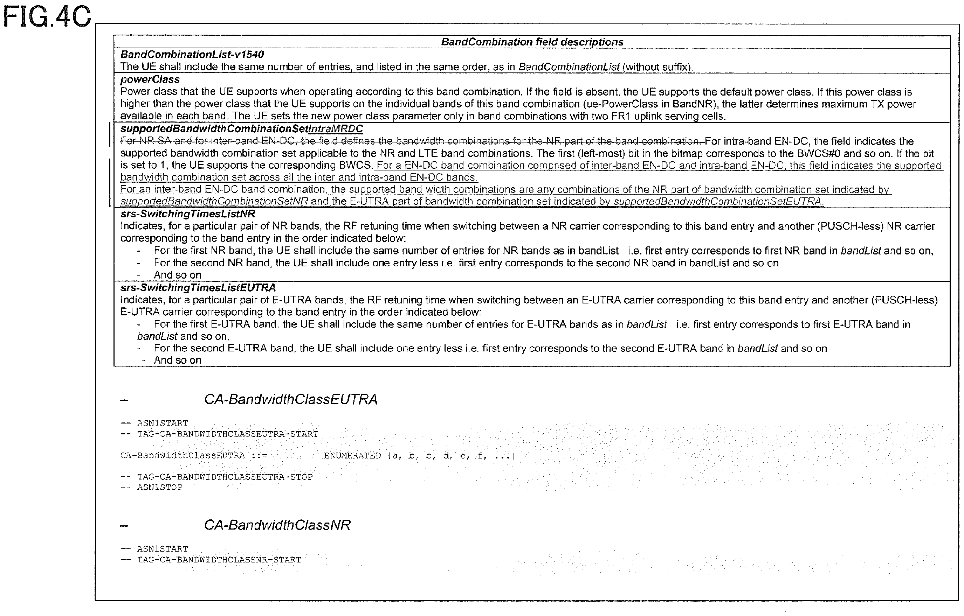

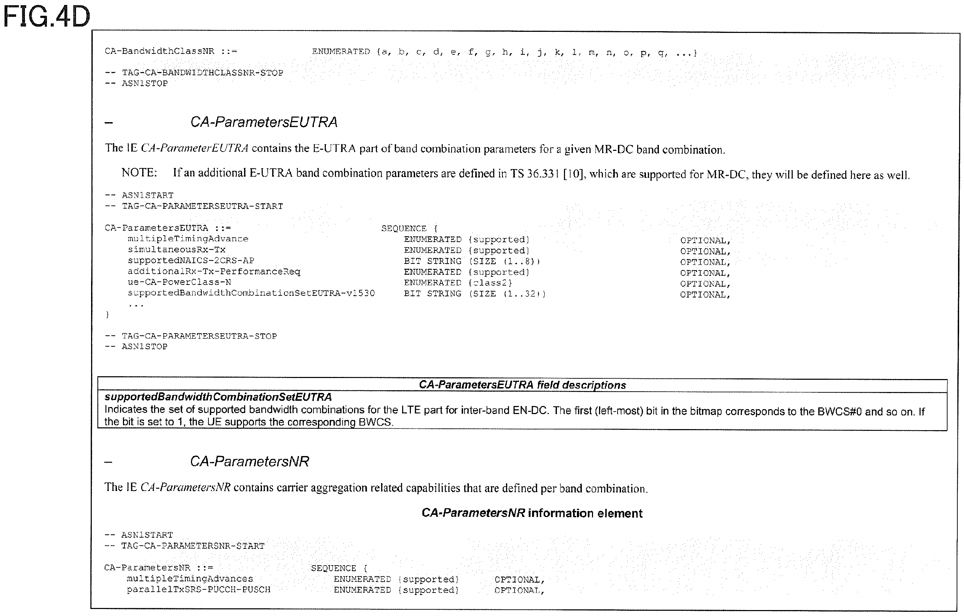

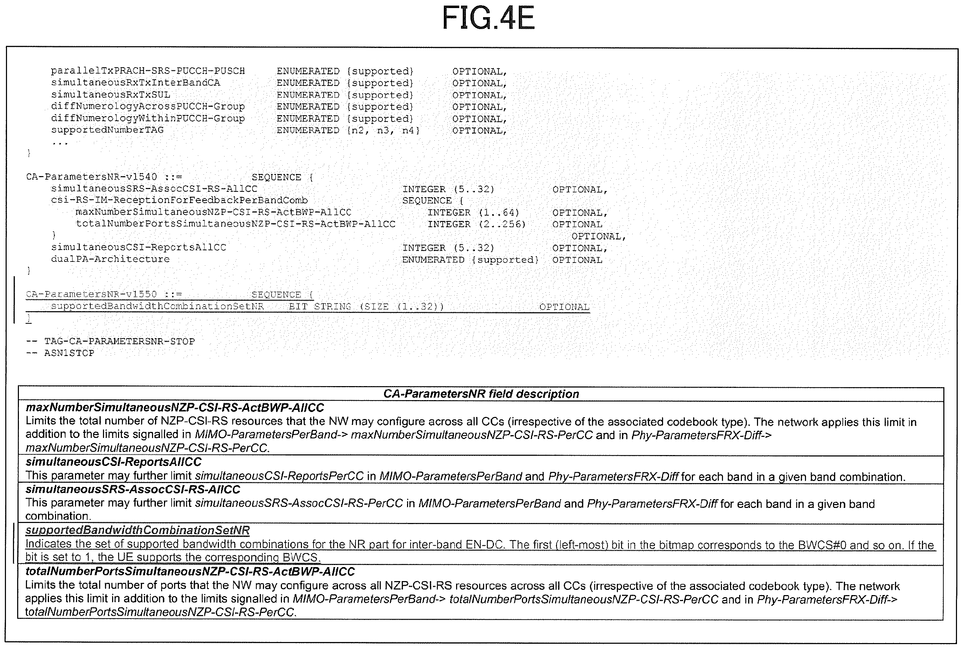

Fig. 4A, Fig. 4B, Fig. 4C Fig. 4D, and Fig. 4E are examples of an indication (No. 2) of bandwidth combinations for band combinations of inter-band EN-DC and intra-band EN-DC.

As shown in Fig. 4A, Fig. 4B, Fig. 4C Fig. 4D, and Fig. 4E, BandCombinationList, a parameter for indicating bandwidth combinations supported by the user apparatus 20, includes SupportedBandwidthCombinationSetIntraMRDC, a field for indicating bandwidth combinations for the intra-band MR-DC band combinations supported by the user apparatus 20.

For intra-band EN-DC, the supported bandwidth combination set, which is supported by the user apparatus 20, applicable to the NR and LTE band combinations, is configured to this field. For example, the first bit (leftmost bit) of the supportedBandwidthCombinationSetIntraMRDC bitmap corresponds to a bandwidth combination #0 (BWCS#0) and the second bit corresponds to a bandwidth combination #1 (BWCS#1). In a case where the bit is set to 1, the user apparatus 20 supports the corresponding bandwidth combination.

For an EN-DC band combination comprised of inter-band EN-DC and intra-band EN-DC, this field indicates the supported bandwidth combination set across all the inter and intra-band EN-DC bands (all bands are taken into account), supported by the user apparatus 20.

For an inter-band EN-DC band combination, the supported bandwidth combinations include any combination of the NR part of bandwidth combination set indicated by supportedBandwidthCombinationSetNR and the E-UTRA part of bandwidth combination set indicated by supportedBandwidthCombinationSetEUTRA.

It should be noted that the parameter supportedBandwidthCombinationSetEUTRA is a field included in the CA-ParametersEUTRA, which is one of the information elements of the terminal capability transmitted from the user apparatus 20 to the base station apparatus 10.

It should be noted that the parameter supportedBandwidthCombinationSetNR is a field included in the CA-ParametersNR, which is one of the information elements of the terminal capability transmitted from the user apparatus 20 to the base station apparatus 10. The name of the parameter is not limited to supportedBandwidthCombinationSetNR, and may be any other name.

### (Embodiment 3)

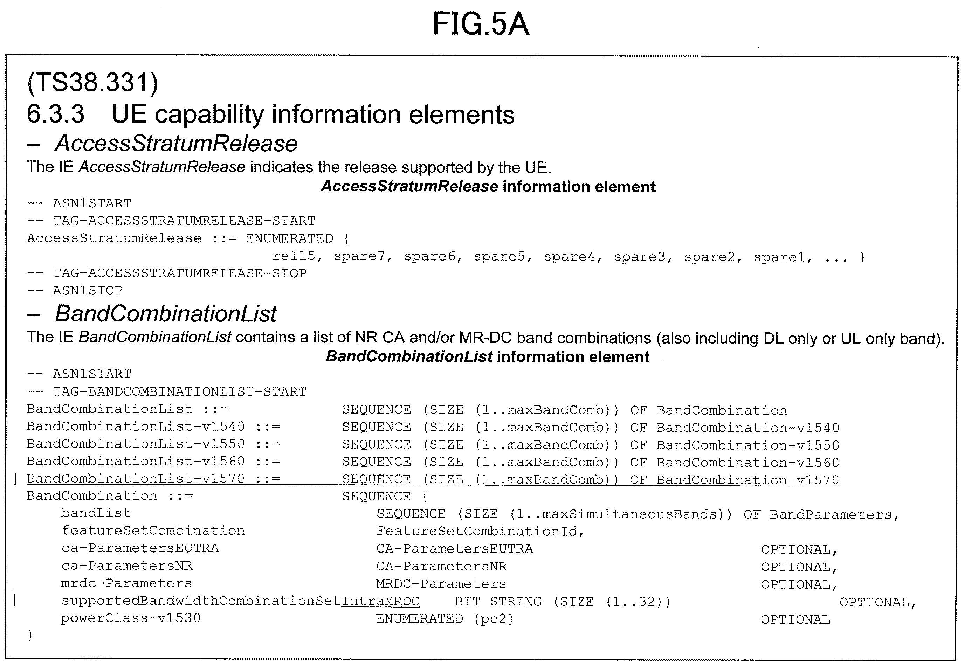

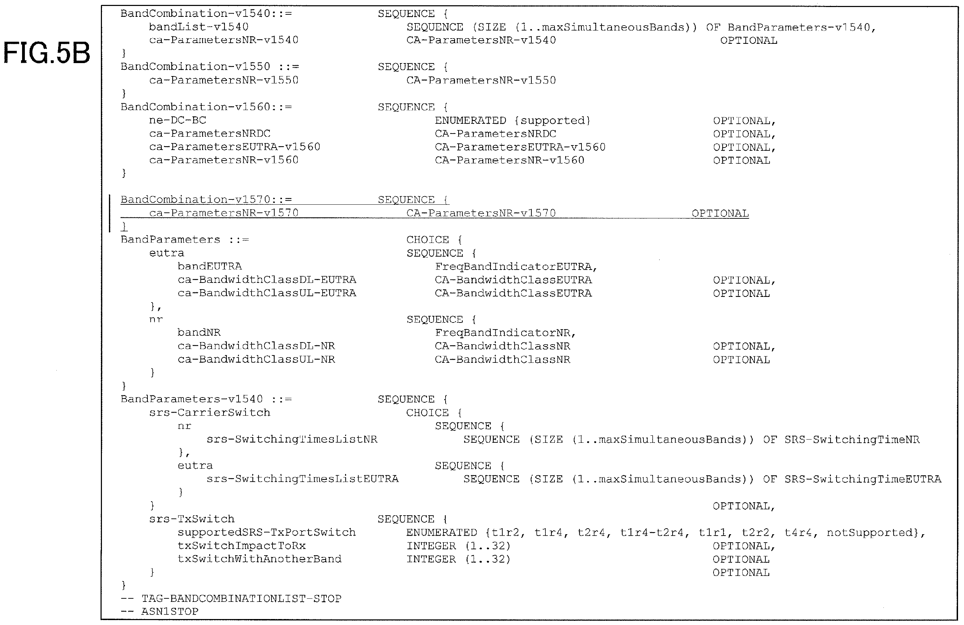

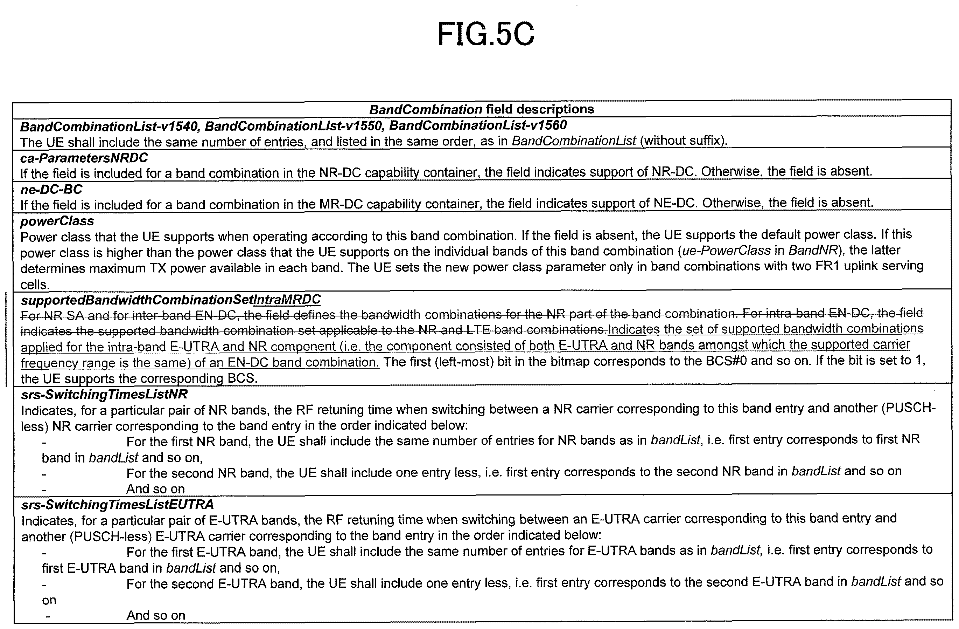

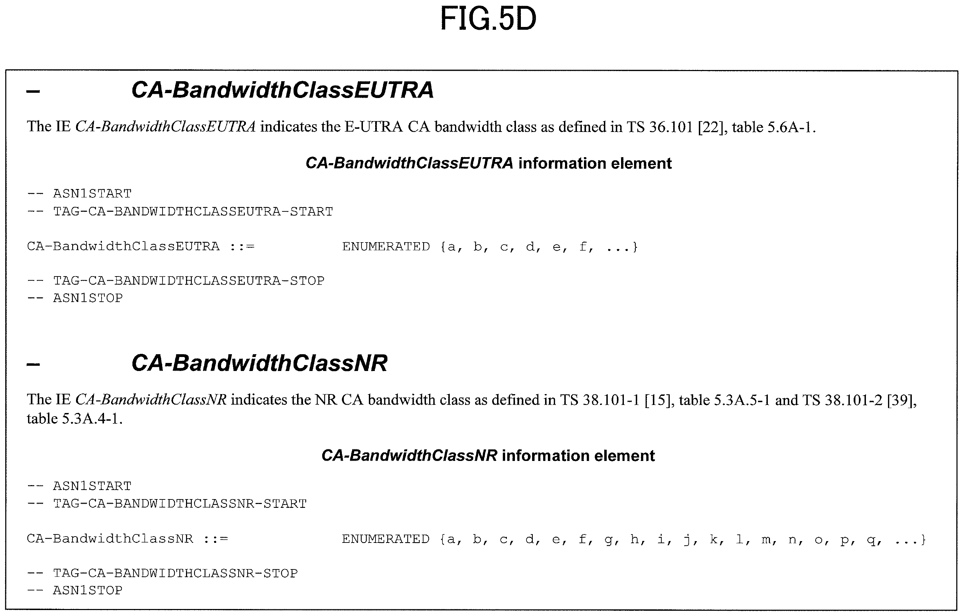

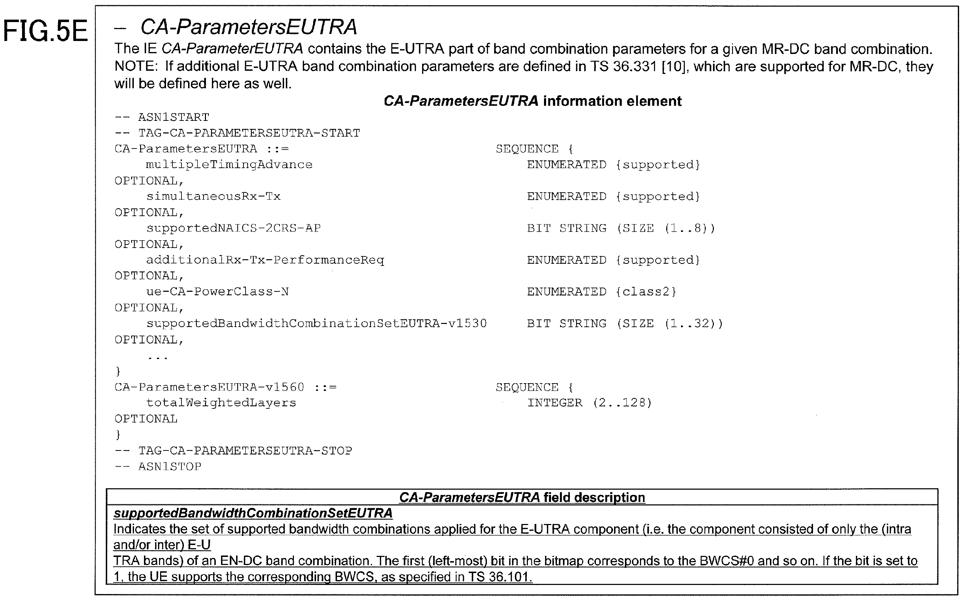

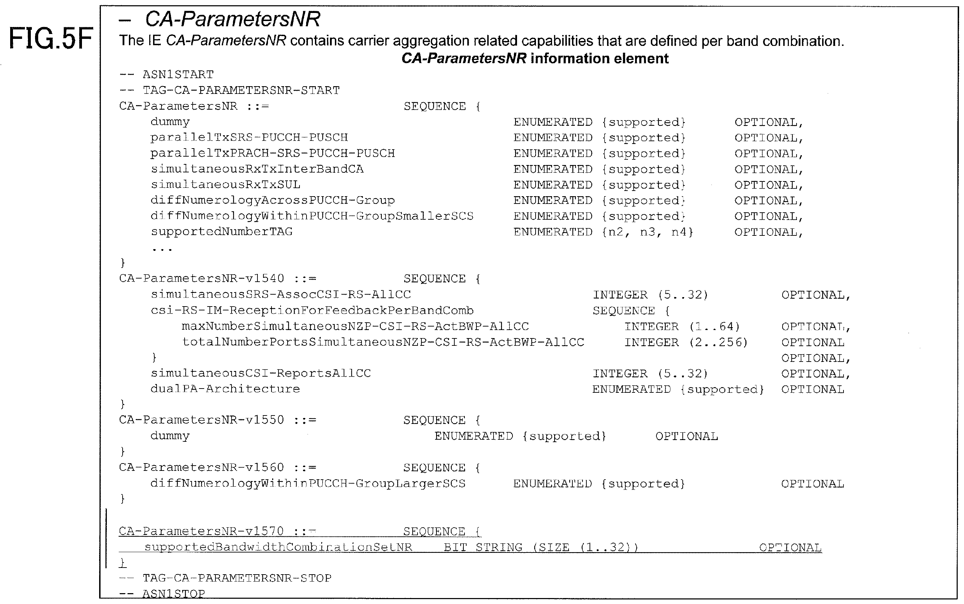

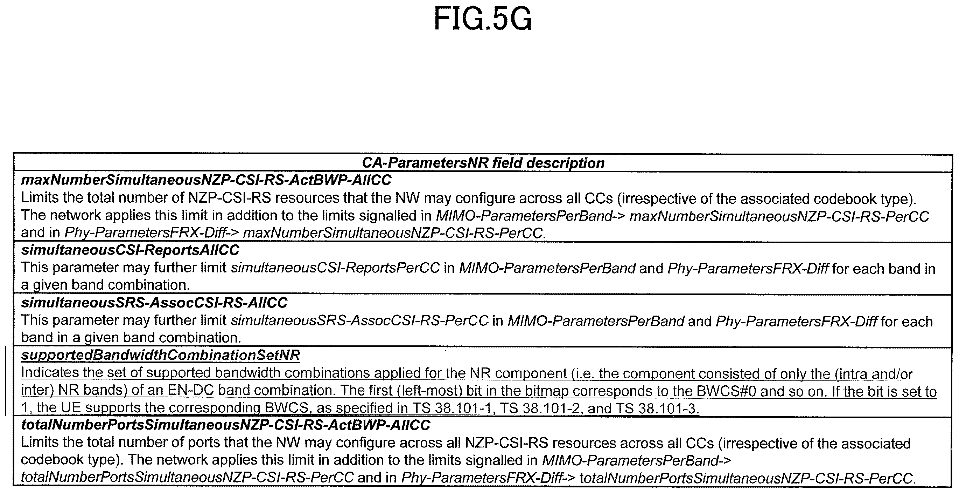

Fig. 5A, Fig. 5B, Fig. 5C Fig. 5D, Fig. 5E, Fig. 5F, and Fig. 5G are examples of an indication (No. 3) of bandwidth combinations for band combinations of inter-band EN-DC and intra-band EN-DC.

As shown in Fig. 5A, Fig. 5B, Fig. 5C Fig. 5D, Fig. 5E, Fig. 5F, and Fig. 5G, BandCombinationList, a parameter for indicating bandwidth combinations supported by the user apparatus 20, includes supportedBandwidthCombinationSetIntraMRDC, a field for indicating bandwidth combinations for the intra-band MR-DC band combinations, supported by the user apparatus 20. Note that the name of the parameter is not limited to supportedBandwidthCombinationSetIntraMRDC, and may be any other name.

This supportedBandwidthCombinationSetIntraMRDC field shows a bandwidth combination set supported by the user apparatus 20, which is applied to the intra-band E-UTRA-NR component (i.e., the component consisting of both E-UTRA and NR bands amongst which the supported carrier frequency range is the same) of an EN-DC band combination. For example, the first bit (leftmost bit) of the supportedBandwidthCombinationSetIntraMRDC bitmap corresponds to a bandwidth combination set#0 (BWCS#0) and the second bit corresponds to a bandwidth combination set#1 (BWCS#1). In a case where the bit is set to 1, the user apparatus 20 supports the corresponding bandwidth combination set. An example of a bandwidth combination set of an intra-band E-UTRA-NR, comprising an E-UTRA band and an NR band having the same frequency range (frequency band), is "E-UTRA band 3 + NR band n3" or the like.

For an inter-band EN-DC band combination, the supported bandwidth combinations include any combination of the NR part of bandwidth combination set indicated by supportedBandwidthCombinationSetNR and the E-UTRA part of bandwidth combination set indicated by supportedBandwidthCombinationSetEUTRA. An example of the NR part of band width combination set indicated by supportedBandwidthCombinationSetNR is "NR band n3 + NR band n78" or the like. An example of the E-UTRA part of band width combination set indicated by supportedBandwidthCombinationSetEUTRA is "E-UTRA band 1 + E-UTRA band 3" or the like.

It should be noted that the parameter supportedBandwidthCombinationSetEUTRA is a field included in the CA-ParametersEUTRA, which is one of the information elements of the terminal capability transmitted from the user apparatus 20 to the base station apparatus 10. The name of the parameter is not limited to supportedBandwidthCombinationSetEUTRA, and may be any other name. "supportedBandwidthCombinationSetEUTRA" indicates a bandwidth combination set supported by the user apparatus 20 which is applied to the E-UTRA component of the EN-DC band combination (i.e., the component consisted of only the (intra and/or inter) E-UTRA bands of an EN-DC band combination) . For example, the first bit (leftmost bit) of the supportedBandwidthCombinationSetEUTRA bitmap corresponds to a bandwidth combination set#0 (BWCS#0) and the second bit corresponds to a bandwidth combination set#1 (BWCS#1). In a case where the bit is set to 1, the user apparatus 20 supports the corresponding bandwidth combination set. (Refer to non-patent document 3)

It should be noted that the parameter supportedBandwidthCombinationSetNR is a field included in the CA-ParametersNR, which is one of the information elements of the terminal capability transmitted from the user apparatus 20 to the base station apparatus 10. The name of the parameter is not limited to supportedBandwidthCombinationSetNR, and may be any other name. "supportedBandwidthCombinationSetNR" indicates a bandwidth combination set supported by the user apparatus 20 which is applied to the NR component of the EN-DC band combination (i.e., the component consisted of only the (intra and/or inter) NR bands of an EN-DC band combination). For example, the first bit (leftmost bit) of the supportedBandwidthCombinationSetNR bitmap corresponds to a bandwidth combination set#0 (BWCS#0) and the second bit corresponds to a bandwidth combination set#1 (BWCS#1). In a case where the bit is set to 1, the user apparatus 20 supports the corresponding bandwidth combination set. (Refer to non-patent document 4, non-patent document 5, and non-patent document 6)

It should be noted that, for example, for band 3A, if the bandwidth combination set of E-UTRA indicated by supportedBandwidthCombinationSetEUTRA includes channel bandwidth 10 MHz and 20 MHz, and the bandwidth combination set of intra band EN-DC indicated by supportedBandwidthCombinationSetIntraMRDC includes channel bandwidth 20 MHz, then the user apparatus 20 supports channel bandwidth 20 MHz for the band 3A in EN-DC, which is a "product set" of the above-described two channel bandwidths.

### (Apparatus configuration)

Next, examples of functional structures of the base station apparatus 10 and the user apparatus 20 that perform the processes and operations described above will be described. The base station apparatus 10 and the user apparatus 20 each have at least functions for performing an embodiment of the present invention. It should be noted that the base station apparatus 10 and the user apparatus 20 each may have only a part of the functions for performing an embodiment of the present invention.

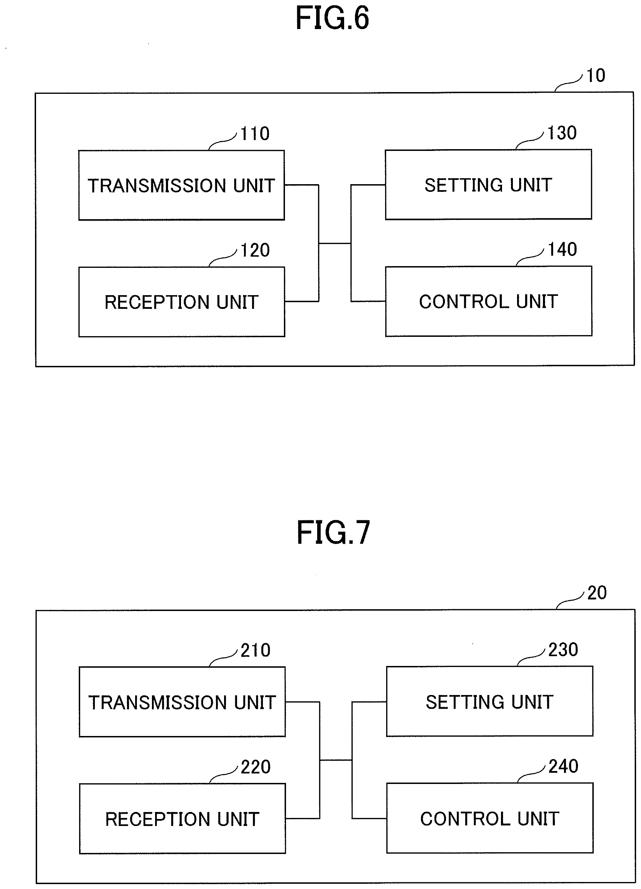

Fig. 6 is a drawing illustrating an example of a functional structure of a base station apparatus 10. As illustrated in Fig. 6, the base station apparatus 10 includes a transmission unit 110, a reception unit 120, a configuration unit 130, and a control unit 140. The functional structure illustrated in Fig. 6 is merely an example. Functional divisions and names of functional units may be anything as long as it can perform operations according to an embodiment of the present invention.

The transmission unit 110 has a function of generating a signal to be transmitted to the user apparatus 20 and for transmitting the signal wirelessly. The reception unit 120 has a function for receiving various signals transmitted from the user apparatus 20 and for obtaining, for example, upper layer information from the received signals. Further, the transmission unit 110 transmits, to the user apparatus 20, a message for requesting the terminal capability indication and information indicating the UL or DL scheduling. The reception unit 120 receives a message related to the terminal capability indication from the user apparatus 20.

The configuration unit 130 stores preset configuration information and various configuration information items to be transmitted to the user apparatus 20. Contents of the setting information are, for example, information related to the band combination, information related to the terminal capability, etc.

The control unit 140 performs controlling transmission, from the base station apparatus 10 to the user apparatus 20, of a request message for the terminal capability indication such as a "UECapabilityEnquiry", and performs controlling communications corresponding to the terminal capability by receiving the terminal capability indication from the user apparatus 20.

Fig. 7 is a drawing illustrating an example of a functional structure of a user apparatus 20. As illustrated in Fig. 7, the user apparatus 20 includes a transmission unit 210, a reception unit 220, a configuration unit 230, and a control unit 240. The functional structure illustrated in Fig. 7 is merely an example. Functional divisions and names of functional units may be anything as long as it can perform operations according to an embodiment of the present invention.

The transmission unit 210 generates a transmission signal from transmission data and transmits the transmission signal wirelessly. The reception unit 220 receives various signals wirelessly and obtains upper layer signals from the received physical layer signals. Further, the reception unit 120 receives a message concerning the terminal capability indication request and information indicating scheduling of UL or DL from the base station apparatus 10.

The configuration unit 230 stores various configuration information items received by the reception unit 220 from the base station apparatus 10. Further, the configuration unit 230 also stores pre-configured configuration information. Contents of the setting information are, for example, information related to the band combination, information related to the terminal capability indication, etc.

The control unit 240 performs control of generation and transmission of the terminal capability indication message (e.g., "UECapabilityInformation") to be transmitted from the user apparatus 20 to the base station apparatus 10. It should be noted that the function of control unit 240 related to the transmission of the terminal capability indication message may be included in the transmission unit 210, and the function of control unit 240 related to the reception of the terminal capability indication request message may be included in the reception unit 220.

### (Hardware structure)

In the above functional structure diagrams used for describing an embodiment of the present invention (Fig. 6 and Fig. 7), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

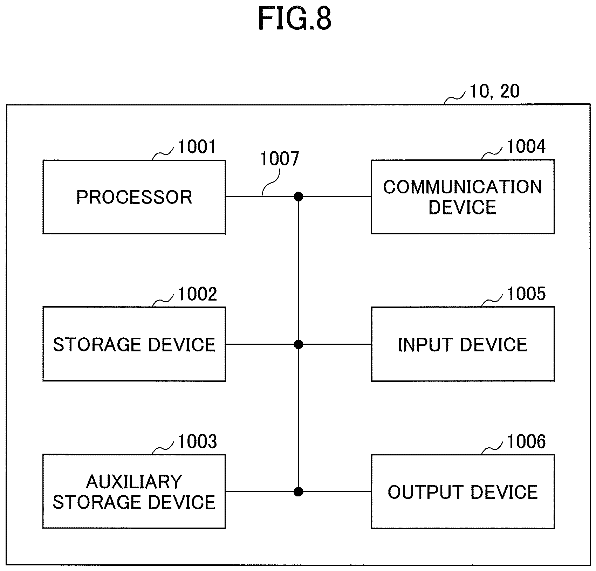

For example, the base station apparatus 10, the user apparatus 20, or the like according to an embodiment of the present invention may function as a computer for processing the radio communication method illustrated by an embodiment of the present invention. Fig. 8 is a drawing illustrating an example of hardware structures of a base station apparatus 10 and a user apparatus 20 according to an embodiment of the present invention. Each of the base station apparatus 10 and the user apparatus 20 may be physically a computer apparatus including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station apparatus 10 and the user apparatus 20 may include one or more of each of the apparatuses illustrated in the figure, or may not include some apparatuses.

Each function in the base station apparatus 10 and the user apparatus 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station apparatus 10 illustrated in Fig. 6 may be realized by control programs that are stored in the storage device 1002 and are executed by the processor 1001. Further, for example, the control unit 240 of the user apparatus 20 illustrated in Fig. 7 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The auxiliary storage device 1003 may be referred to as an auxiliary storage device. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station apparatus 10 and the user apparatus 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Embodiment summary)

As described above, according to an embodiment of the present invention, a user apparatus is provided. The user apparatus includes a reception unit configured to receive band information of a first radio access technology (RAT) and a second RAT band from a base station apparatus; a control unit configured to determine a first parameter indicating a supported bandwidth combination set (supported BWCS) for a first RAT component of a band combination of a inter-band dual connectivity of the first RAT and the second RAT (inter-band EN-DC), a second parameter indicating: a supported BWCS for a second RAT part of the EN-DC band combination for the inter-band EN-DC of the first RAT and the second RAT; a supported BWCS applicable to the band combination of the first RAT and the second RAT for the intra-band dual connectivity of the first RAT and the second RAT (intra-band EN-DC); and supported BWCS across all inter-band EN-DC bands and intra-band EN-DC bands for the dual connectivity of the first RAT and the second RAT including the inter-band EN-DC and the intra-band EN-DC, wherein, for the band combination of the inter-band EN-DC, any combination of: the second RAT part of the BWCS indicated by the second parameter; and the first RAT part of the BWCS indicated by the first parameter, is supported; and a transmission unit configured to transmit terminal capability information including the determined first parameter and the second parameter to the base station apparatus.

According to the above, it is possible to indicate a bandwidth combination that can be applied to dual connectivity performed in a wireless communication system using a plurality of RATs.

In addition, according to an embodiment of the present invention, a user apparatus is provided. The user apparatus includes a reception unit configured to receive band information of a first radio access technology (RAT) and a second RAT band from a base station apparatus; a control unit configured to determine a first parameter indicating a supported bandwidth combination set (supported BWCS) for a first RAT component of a band combination for an inter-band dual connectivity of the first RAT and the second RAT (inter-band EN-DC),
a second parameter indicating, for the intra-band dual connectivity of the first RAT and the second RAT (intra-band EN-DC), a supported BWCS for the second RAT part, and a third parameter indicating: a supported BWCS applicable to the band combination of the first RAT and the second RAT; and supported BWCS across all inter-band EN-DC bands and intra-band EN-DC bands for the dual connectivity of the first RAT and the second RAT including the inter-band EN-DC and the intra-band EN-DC, wherein, for the inter-band EN-DC band combination, any combination of the second RAT part of the BWCS indicated by the second parameter and the first RAT part of the BWCS indicated by the first parameter, is supported; and a transmission unit configured to transmit terminal capability information including the determined first parameter, second parameter, and third parameter, to the base station apparatus.

According to the above, it is possible to indicate a bandwidth combination that can be applied to dual connectivity performed in a wireless communication system using a plurality of RATs.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, a base station apparatus 10 and a user apparatus 20 have been described by using functional block diagrams. However, the apparatuses may be realized by hardware, software, or a combination of hardware and software. The software executed by a processor included in a base station apparatus 10 according to an embodiment of the present invention and the software executed by a processor included in a user apparatus 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication (transmission, notification) may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC signaling, MAC signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station apparatus 10 in the present specification, may be performed by an upper node in some cases . In a network including one or more network nodes including a base station apparatus 10, it is apparent that various operations performed for communicating with a user apparatus 20 may be performed by the base station apparatus 10 and/or another network node other than the base station apparatus 10 (for example, but not limited to, MME or S-GW). According to the above, a case is described in which there is a single network node other than the base station apparatus 10. However, a combination of multiple other network nodes may be considered (e.g., MME and S-GW).

The information or signals described in this disclosure may be output from a higher layer (or lower layer) to a lower layer (or higher layer) . The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling) . Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication device, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming," "expecting," or "considering," etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts, " "circuits, " "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each user apparatus 20 to allocate radio resources (such as frequency bandwidth, transmission power, etc. that can be used in each user apparatus 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in a RB may be the same, regardless of the numerology, and may be 12, for example. The number of subcarriers included in a RB may be determined on the basis of numerology.

Further, the time domain of a RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C. "Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Note that, in the present disclosure, the transmission unit 210 and the reception unit 220 are examples of the communication unit. MN is an example of a first base station apparatus. SN is an example of a second base station apparatus.

It should be noted that, in the present disclosure, supportedBandwidthCombinationSetEUTRA is an example of a first parameter, supportedBandwidthCombinationSet and supportedBandwidthCombinationSetNR are examples of a second parameter, and supportedBandwidthCombinationSetIntraMRDC is an example of a third parameter.

In addition, LTE is an example of a first RAT, and NR is an example of a second RAT

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### [DESCRIPTION OF THE REFERENCE NUMERALS]

- 100: Base station apparatus
- 200: User apparatus
- 110: Transmission unit
- 120: Reception unit
- 130: Configuration unit
- 140: Control unit
- 210: Transmission unit
- 220: Reception unit
- 230: Configuration unit
- 240: Control unit
- 1001: Processor
- 1002: Storage device
- 1003: Auxiliary storage device
- 1004: Communication device
- 1005: Input device
- 1006: Output device

## Claims

1. A terminal comprising:
a reception unit configured to receive band information of a first radio access technology (RAT) and a second RAT from a base station apparatus;
a control unit configured to determine
a first parameter indicating a supported bandwidth combination set for a first RAT component of a band combination of a dual connectivity of the first RAT and the second RAT (EN-DC),
a second parameter indicating a supported bandwidth combination set for a second RAT component of the EN-DC band combination, and
a third parameter indicating a supported bandwidth combination set for an intra-band component of the first RAT and the second RAT, of the EN-DC band combination; and
a transmission unit configured to transmit terminal capability information including the determined first, second, and third parameters to the base station apparatus.

2. The terminal according to claim 1,
wherein any combination of
a second RAT part of the bandwidth combination indicated by the second parameter and
a first RAT part of the bandwidth combination indicated by the first parameter
is supported for an inter-band dual connectivity of the first RAT and the second RAT (inter-band EN-DC).

3. A communication method of a terminal, comprising:
receiving band information of a first wireless access technology (RAT) and a second RAT from a base station apparatus,
determining
a first parameter indicating a supported bandwidth combination set for a first RAT component of a band combination of a dual connectivity of the first RAT and the second RAT (EN-DC),
a second parameter indicating a supported bandwidth combination set for a second RAT component of the EN-DC band combination, and
a third parameter indicating a supported bandwidth combination set for an intra-band component of the first RAT and the second RAT, of the EN-DC band combination; and
transmitting terminal capability information including the first, the second and the third determined parameters to the base station apparatus.
